# EUROPEAN PATENT SPECIFICATION

(11) **EP 1 876 089 B1**
(45) Date of publication and mention of the grant of the patent: **22.02.2012**
(21) Application number: 07108072.5
(22) Date of filing: 11.05.2007
(51) Int. Cl.: B62D 57/032

(54) **Walking robot and control method thereof**
Schreitroboter und Steuerverfahren dafür
Robot marchant et son procédé de commande

(30) Priority: 05.07.2006 KR 20060063091
(43) Date of publication of application: 09.01.2008
(73) Proprietor: SAMSUNG ELECTRONICS CO., LTD., Suwon-si, Gyeonggi-do 442-742 (KR)
(72) Inventor: Kim Hyun Kyu, Songpa-gu Seoul (KR); Roh Kyung Shik, Seohyeon-dong, Boondang-gu, Seongnam-si Gyeonggi-do (KR); Kwon, Woong, Seongnam-si Gyeonggi-do (KR)
(74) Representative: Grootscholten, Johannes A.M.

(56) References cited:
- EP-A1- 1 393 866
- EP-A1- 1 466 705
- EP-A1- 1 473 122
- EP-A1- 1 736 286
- EP-A2- 1 510 446
- WO-A2-02/069256
- US-A1- 2004 036 437

## Description

The present general inventive concept relates to walking robots, and control methods thereof.

In general, a robot is a machine which is programmed to move and perform certain tasks automatically. Robots have been widely used in industrial fields since the late 1960's. The robot in an early stage is an industrial robot, such as a manipulator, a feeding device or the like, for the purpose of realizing an auto control system in plants.

The most basic apparatus for driving a movable robot is a four-wheeled driving apparatus. Four-wheeled movable robots have an advantage in that they are able to run stably without falling. They cannot, however, be widely used in practical applications, because they are only able to move on a flat surface and are not able to traverse a non-flat area, such as a step, a doorsill, or other similar obstacles. In order to make up for the disadvantage of the four-wheeled movable robots, biped walking robots, quadruped walking robots or hexapod walking robots have been developed recently. The biped walking robots have an advantage in that they are able to move more fluently on a non-flat surface or a discontinuous surface such as a step, a ladder or the like than the quadruped or hexapod walking robots.

A conventional biped walking robot includes a skeletal frame to provide a pair of legs like human legs. When controlling the biped walking robot, if control factors such as a stride, a pace and a walking direction are set, walking patterns of two legs are generated according to the set control factors, and a trajectory is determined according to the walking patterns. In order for the two legs to follow the determined trajectory, current positions of joints of the legs are derived from an inverse equation of motion, and control values for driving parts mounted to the joints are calculated to move the joints to target positions.

Such a biped walking is achieved by a servo control. During the biped walking, it is detected whether the legs accurately follow the trajectory determined according to the walking patterns. When the legs deviate from the trajectory, a servo torque is regulated. In other words, by regulating the torque corresponding to the deviation in the control values transmitted to the driving parts, the legs are controlled to accurately follow the trajectory.

However, the conventional method of controlling the walking robot has a disadvantage in that power consumption is increased, because the trajectory is derived at every moment the robot is walking, an error between the trajectory and the actual position of each leg is calculated, and the driving parts of the legs are servo-controlled continuously to follow the trajectory.

Such a continuous control of the driving parts increases a unique frequency of the walking robot, and increases a difference with natural walking behaviors of a human being. So, the efficient walking cannot be achieved.

Further, since the walking pattern is generated by the stride and the pace, preset regardless of the unique frequency of the walking robot, the energy consumption is increased.

A walking robot according to the preamble of claim 1 is known from EP 1393866 A1.

The present invention aims to provide a walking robot and a control method thereof capable of generating a walking pattern according to a unique frequency of the walking robot and adjusting stiffness of driving parts of legs according to the generated walking pattern, to thereby increase an energy efficiency.

This object has been achieved with the walking robot according to the present invention.

According to the present invention, there is provided a walking robot including legs, driving parts provided respectively at the legs to operate the legs, detecting parts provided respectively at the legs to detect operating states of the legs, a walking pattern generating unit to generate a walking pattern by using predetermined control factors, and a stiffness adjusting unit to adjust a stiffness of the driving parts according to the operating states of the legs which operate according to the walking pattern.

The stiffness adjusting unit can adjust the stiffness of the driving parts by using a displacement of a bottom of each of the legs and a displacement of an end of each of the legs on the basis of a center of gravity of the walking robot.

The stiffness adjusting unit can also generate a stiffness adjusting pattern for each of the legs by using the displacement of the bottom of each of the legs and the displacement of the end of each of the legs according to the walking pattern generated from the walking pattern generating unit.

The operating state of each of the legs is divided into a load-supporting step to support a weight of the walking robot, a taking-off step to take each of the legs off of a ground respectively, a swing step, and a landing step to return each of the legs to the ground respectively. The stiffness adjusting unit adjusts the stiffness of the driving parts respectively according to the load-supporting step, the taking-off step, the swing step and the landing step.

The stiffness adjusting unit sets the stiffness of the driving parts in the swing step and the landing step to be lower than the stiffness of the driving parts in the load-supporting step and the taking-off step.

The walking pattern generating unit can include a neural oscillator which has two modeled neurons and generates an oscillating pattern by interaction between the neurons. The neural oscillator receives data about the operating states of the legs from the detecting parts and generates a walking pattern matching with a unique frequency of the walking robot.

The stiffness adjusting unit can generate a stiffness adjusting pattern for each of the legs according to the walking pattern generated from the walking pattern generating unit, and adjusts the stiffness of each of the legs according to the stiffness adjusting pattern.

According to the present invention in a second aspect, there is provided a method of controlling a walking robot including legs and driving parts to operate the legs as defined in claim 6. The method includes generating a walking pattern by using predetermined control factors; adjusting stiffness of each of the legs according to operating states of the legs which operate according to the walking pattern; calculating a control value for each of the legs according to the walking pattern and the stiffness of each of the legs; and controlling the operation of the legs according to the control value.

The adjusting can include adjusting the stiffness of each of the legs by using a displacement of a bottom of each of the legs and a displacement of an end of each of the legs on the basis of a center of gravity of the walking robot.

The adjusting further can include generating a stiffness adjusting pattern for each of the legs by using the displacement of the bottom of each of the legs and the displacement of the end of each of the legs according to the walking pattern, and adjusting the stiffness of each of the legs by using the stiffness adjusting pattern.

The method further includes dividing the operating state of each of the legs into a load-supporting step to support a weight of the walking robot, a taking-off step to take each of the legs off of a ground respectively, a swing step, and a landing step to return each of the legs to the ground. The adjusting includes adjusting the stiffness of the driving parts respectively according to the load-supporting step, the taking-off step, the swing step and the landing step.

The adjusting further includes setting the stiffness of the driving parts in the swing step and the landing step to be lower than the stiffness of the driving parts in the load-supporting step and the taking-off step.

The method can also include providing a neural oscillator to generate the walking pattern, the neural oscillator having two modeled neurons and generating an oscillating pattern by interaction between the neurons; detecting the operating states of the legs; and transmitting data about the operating states of the legs to the neural oscillator. The generating includes generating the walking pattern to match with a unique frequency of the walking robot.

The adjusting can also include generating a stiffness adjusting pattern for each of the legs according to the walking pattern, and adjusting the stiffness of each of the legs according to the stiffness adjusting pattern.

The present invention further provides a stiffness control method of a walking robot including legs, the method including calculating a trajectory of each leg according to a walking pattern and a stiffness of the leg continuously using an x-axis and a z-axis of the trajectory and adjusting the stiffness of each leg using the trajectory.

Adjusting the stiffness of each leg can further include using a stiffness adjustment pattern that is in inverse proportion to a distance on the z-axis in consideration of a distance on the x-axis.

In a further aspect of the present invention, there is provided a walking robot including legs, driving parts provided respectively at the legs to operate the legs, and a control unit to determine a trajectory and to compute a driving amount of the driving parts according to a unique frequency of the walking robot.

The control unit can also use a walking pattern and adjusts the stiffness of the driving parts to determine the trajectory.

The control unit further uses a calculation of an inverse equation of motion to determine the driving amount of the driving parts.

According to the present invention in another aspect, there is provided a method of controlling a walking robot, the method including dividing a walking process of the robot into a plurality of steps, calculating an optimal stiffness at each step according to specifications of the robot, and applying the calculated optimal stiffness at each step of the robot.

The specifications of the robot can be determined by a tuning process.

The present invention will become apparent and more readily appreciated from the following description of the embodiments, taken in conjunction with the accompanying drawings of which:
FIG. 1 is a schematic view illustrating legs and driving parts of a walking robot in accordance with an embodiment of the present general inventive concept;
FIG. 2 is a control block diagram illustrating a walking robot in accordance with an embodiment of the present general inventive concept;
FIG. 3 is a schematic view illustrating a neural oscillator of an embodiment of a walking pattern generating unit;
FIG. 4 is a view illustrating operating states of legs during walking, which are divided for a stiffness adjustment;
FIG. 5 is a graph illustrating operating states of legs and a stiffness adjusting pattern according to walking patterns; and
FIG. 6 is a flow chart illustrating a control method of a walking robot according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

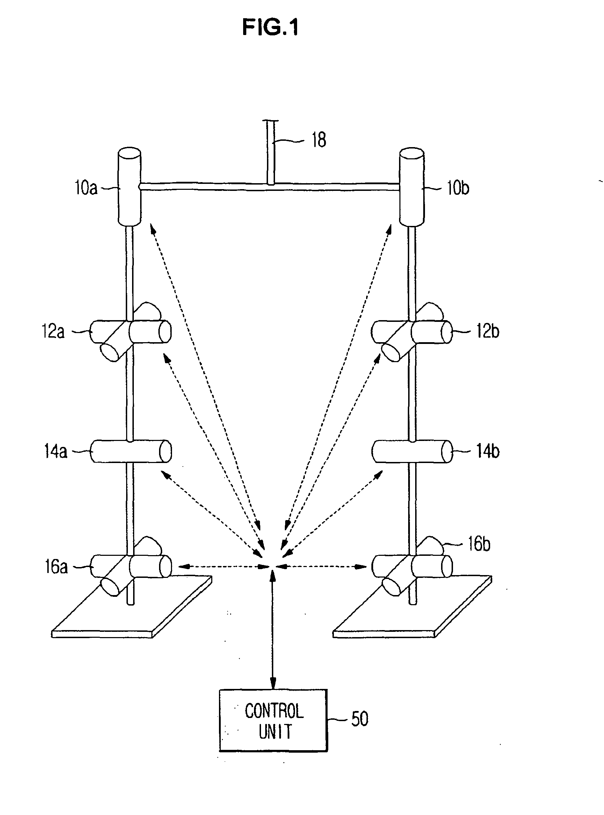

FIG. 1 is a schematic view illustrating legs and driving parts of a walking robot according to an embodiment of the present general inventive concept. As illustrated in FIG. 1, the legs and the driving parts of the walking robot are connected to an upper body part (not illustrated) through a waist joint 18. Driving parts 10a, 10b, 12a and 12b of femur joints move the legs in a pivot direction, an x-axis direction and a z-axis direction. For example, by operating the driving parts 10a and 10b of the femur joints for movement in the pivot direction, a walking direction of the walking robot can be controlled. In addition, by operating driving parts 14a and 14b of knee joints and driving parts 16a and 16b of ankle joints, positions of the legs are controlled.

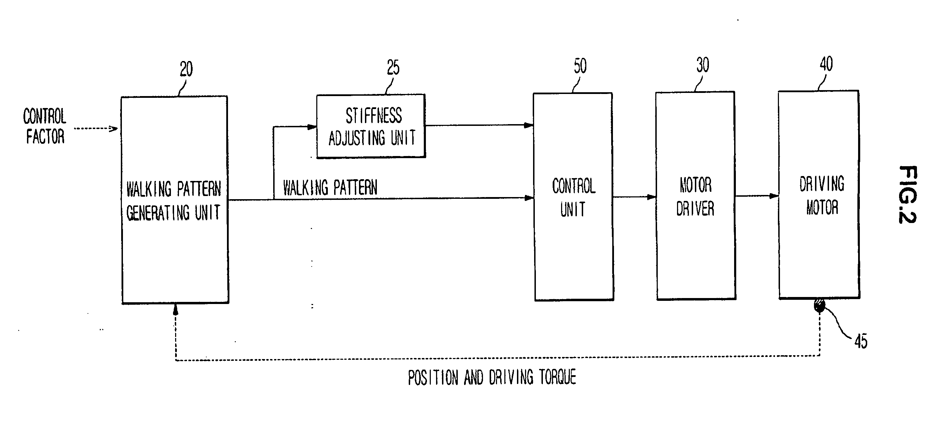

The driving parts of all joints of the legs are controlled by a control unit 50. FIG. 2 is a control block diagram of the walking robot according to an embodiment of the present general inventive concept. If control factors such as a stride, a pace, a walking direction and the like are set, a walking pattern generating unit 20 generates a walking pattern corresponding to the control factors, and outputs a phase signal having a constant frequency corresponding to the generated walking pattern. The walking pattern may not be generated only at an initial step of the walking but also in real time during the walking. An outputted phase signal illustrates operating states of the legs. For example, the outputted phase signal may indicate displacements of bottoms of the legs such as the displacements on the z-axis, or displacements of ends of the legs, or such as the displacements on the x-axis on the basis of a center of gravity of the walking robot. The walking pattern generating unit 20 may adjust the outputted phase signal according to the detected operating states of the driving parts, and generate the walking pattern according to the unique frequency of the walking robot, which will be described later.

The walking pattern generated from the walking pattern generating unit 20 is transmitted to a stiffness adjusting unit 25, and the stiffness adjusting unit 25 adjusts the stiffness according to the operating state of each leg which is driven according to the walking pattern. In order to precisely follow a trajectory, an error between a determined trajectory and an actual position of each leg must be minimized. For this reason, a strong force is applied to the driving parts (i.e., driving motors 40) to compensate for the error. Thus, a position of the driving motors 40 fluctuates along the trajectory with a high frequency. The same principle as providing a coil spring applies to having a high elasticity at the joints of the legs, based on the Hook's law, because a strong force is needed to deform the coil spring, and the joints of the legs are subjected to be located at a force-equilibrium position. Though the coil spring is deformed, the coil spring vibrates fast within an extremely narrow range. In general, such a state is called a high-stiffness state.

Different from the so-called high-stiffness state, a human being has natural walking behaviors such that the stiffness of two legs is adjusted appropriately for smooth and highly efficient walking. For example, if one leg is in a swing motion, the other leg should support a load (i.e., a weight) of a person. The leg supporting the load should maintain a high stiffness. If a foot is taken off the ground and a calf swings about the knee joint, the stiffness of a swinging leg may be lowered because the leg does not deviate so much from the trajectory in a state of equilibrium of gravity and inertia. By adjusting the stiffness of the legs according to the operating states of the legs, the servo-control amount of the driving motors 40 can be reduced, and the highly efficient walking can be performed.

The stiffness adjustment corresponding to the operating states of the legs may be performed in various ways. An example provides a quantized stiffness control method such that the walking process is divided into several (for example, four) operations, an optimal stiffness is calculated at each step through an experiment (the experiment is a kind of tuning process and varies according to the robot spec), and the calculated optimal stiffness is applied at each step.

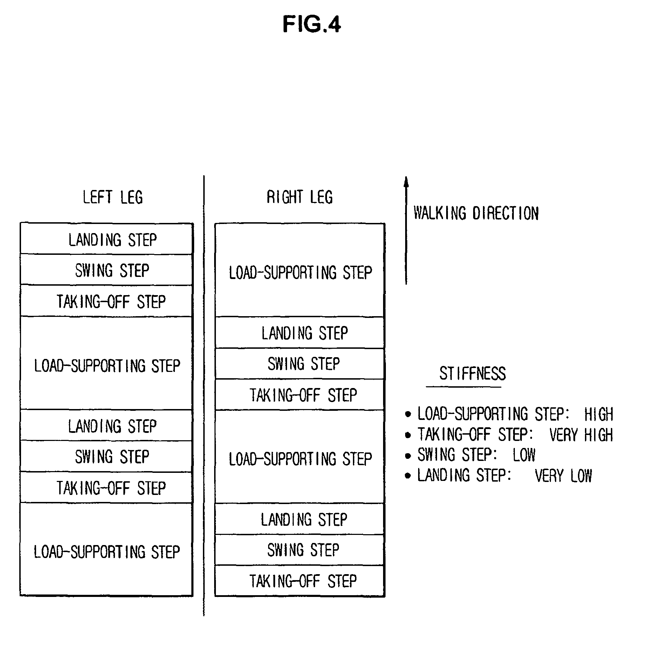

FIG. 4 is a view illustrating the operating states of the legs during walking operations, which are divided for the stiffness adjustment. As illustrated in FIG. 4, if a right leg is in a walking step, a left leg is in a load-supporting step. The walking step includes a taking-off step, a swing step and a landing step. In the load-supporting step, the leg should maintain high stiffness to support the load. In the taking-off step, the leg should maintain very high stiffness to follow the determined trajectory because an initial movement of the leg is fixed in the taking-off step. After that, since it does not matter if the leg swings or reaches the ground by gravity and inertia, the stiffness is maintained at low or very low levels in the swing step and the landing step. Preferably, the stiffness may be maintained at a low level in the swing step, and the stiffness may be maintained at a very low level in the landing step. The stiffness in the load-supporting step may be set equal to or higher than the stiffness in the taking-off step. On the other hand, the stiffness in the swing step may be set equal to or lower than the stiffness in the landing step.

Another example provides a stiffness control method such that the trajectory of each leg is calculated according to the walking patterns, and the stiffness of the legs is adjusted continuously by using the distance on the x-axis or z-axis of the trajectory. This control method can increase an energy efficiency, but has a complicated control process, compared with the aforementioned control method according to the operating states of the legs.

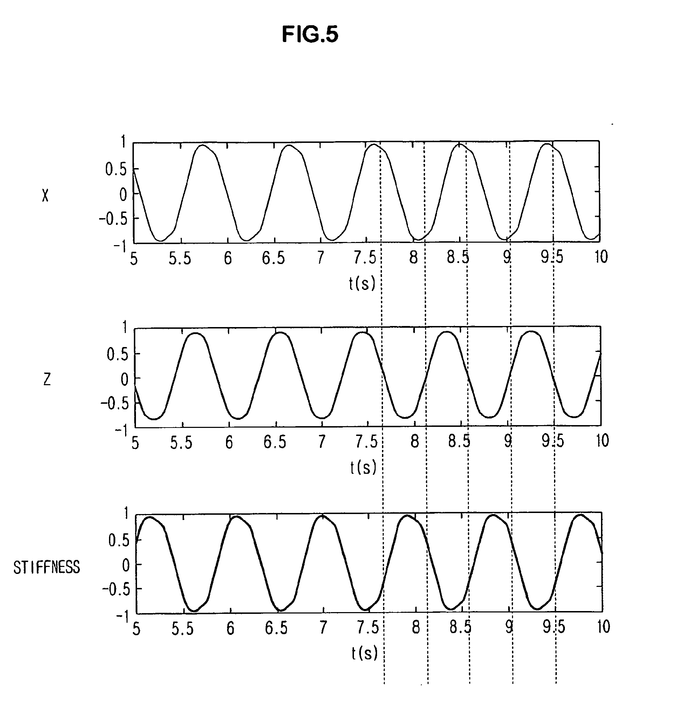

FIG. 5 is a graph illustrating a stiffness adjustment pattern with a lapse of time according to the control method wherein the stiffness of the legs is adjusted continuously by using a distance on the x-axis or the z-axis of the trajectory. The stiffness adjusting pattern illustrated in FIG. 5 has a characteristic of being in inverse proportion to the distance on the z-axis in consideration of the distance on the x-axis. Such a stiffness adjusting pattern is acquired through the experiment, and may be changed in many ways according to the specifications of the robot.

The control unit 50 receives the walking patterns and the adjusted stiffness from the stiffness adjusting unit 25, determines the trajectory, and computes a driving amount of the driving motors 40 of the joints by calculating an inverse equation of motion. According to the computed driving amount, the control unit 50 transmits a motor control signal to a motor driver 30. In response to the motor control signal from the control unit 50, the motor driver 30 operates the driving motors 40. Detecting parts 45 are provided respectively at the legs, and detect the operating states of the driving motors 40, such as a position, a driving torque and the like. The detecting parts 45 transmit the detected values to the walking pattern generating unit 20 to adjust the phase signal according to the walking patterns.

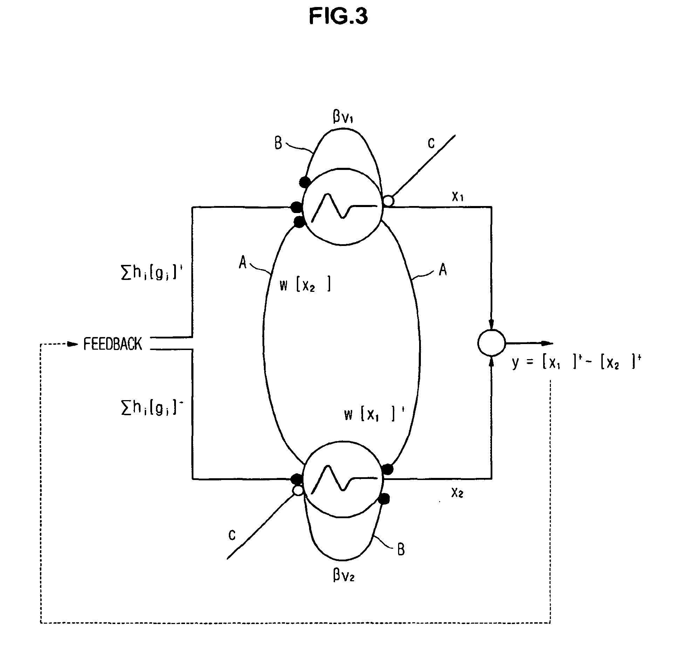

FIG. 3 is a schematic view illustrating a neural oscillator of an embodiment of the walking pattern generating unit. As illustrated in FIG. 3, the neural oscillator includes two modeled neurons. Two neurons are connected to each other by inhibitions A. Each neuron has an inhibition B. The neural oscillator generates the walking pattern (the oscillating pattern) matching with the unique frequency of the walking robot through the inhibitions A and B, which is called an "entrainment". In order to generate a natural walking pattern similar to a real human walking pattern, it is necessary to maintain the unique frequency of the walking robot at a low level. By appropriately regulating the stiffness in walking by using the control method of the present general inventive concept, the unique frequency of the walking robot can be lowered, and the entrainment in the neural oscillator can be achieved, to thereby generate the smooth walking pattern and increase the energy efficiency. Since the detailed explanation of the neural oscillator is disclosed in "Neural control of rhythmic arm movements" (Neural Networks, M. Willianmson, vol. 11, no. 7-8, pp. 1379-1394, 1998), the description of the neural oscillator is omitted herein. By applying the neural oscillator to a walking control, the stiffness is adjusted appropriately and the walking pattern to match with the unique frequency of the natural walking behavior is generated.

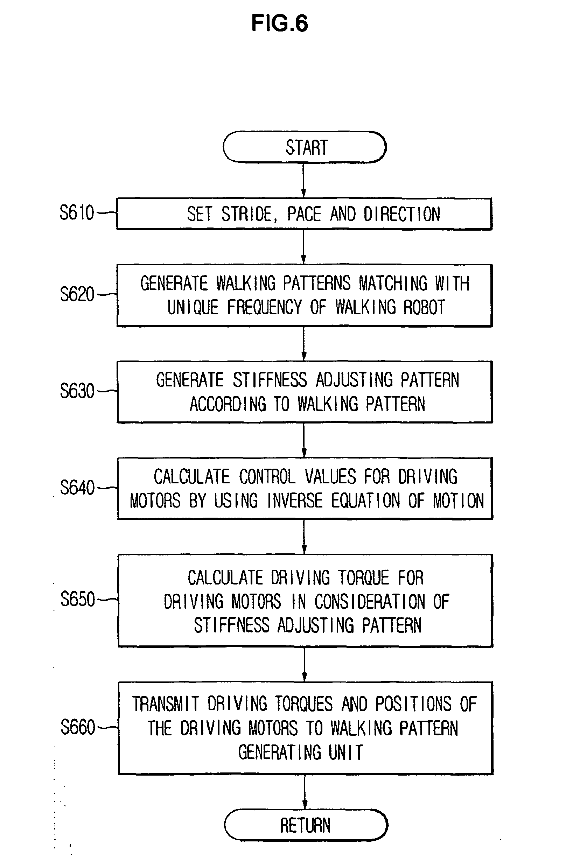

FIG. 6 is a flow chart illustrating a control method of the walking robot according to an embodiment of the present general inventive concept. First, control factors such as the stride, the pace, the walking direction and the like are set and inputted at operation S610. The walking pattern generating unit 20 receives the control factors and the feedback data of the operating states of the driving parts, and generates the walking patterns to match with the unique frequency of the walking robot at operation S620. The stiffness adjusting unit 25 generates the stiffness adjusting pattern according to the generated walking pattern at operation S630. The control unit 50 receives the walking pattern and the stiffness adjusting pattern, and calculates the control values for the driving motors of the joints by using the inverse equation of motion at operation S640. The motor driver 30 receives the control values, and calculates the driving torque for the driving motors 40 of the joints in consideration of the stiffness adjusting pattern at operation S650. The detecting parts 45 detect the operating states of the driving motors 40, such as the positions and the driving torques, and transmit the detected values to the walking pattern generating unit 20 at operation S660, so that the walking pattern generating unit 20 can generate the walking pattern to match with the unique frequency of the walking robot.

As apparent from the above description, the walking robot and control method thereof according to the preferred embodiments of the present general inventive concept can achieve a smooth and highly-efficient walking robot. Since the walking pattern to match with the unique frequency of the walking robot can be generated, energy efficiency is increased.

Also, the unique frequency of the walking robot can be lowered by adjusting the stiffness of the driving parts during the walking operations.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A walking robot comprising: legs;
driving parts (10a, 10b, 12a, 12b, 14a, 14b, 16a, 16b) provided respectively at the legs to operate the legs;
detecting parts provided respectively at the legs to detect an operating state for each leg;
a walking pattern generating unit (20) to generate a walking pattern by using predetermined control factors; and a stiffness adjusting unit (25) to adjust a stiffness of the driving parts according to the operating states of the legs which operate according to the walking pattern;
**characterized in that** said operating state of each of the legs is divided into a load-supporting step to support a weight of the walking robot, a taking-off step to take each of the legs off the ground respectively, a swing step, and a landing step to return each of the legs to the ground respectively, and **in that** the stiffness adjusting unit (25) is configured to adjust the stiffness of the driving parts respectively according to the load-supporting step, the taking-off step, the swing step and the landing step, and **in that** the stiffness adjusting unit (25) sets the stiffness of the driving parts (10a, 10b, 12a, 12b, 14a, 14b, 16a, 16b) in the swing step and the landing step to be lower than the stiffness of the driving parts in the load-supporting step and the taking-off step.

2. The walking robot according to claim 1, wherein the stiffness adjusting unit (25) adjusts the stiffness of the driving parts (10a, 10b, 12a, 12b, 14a, 14b, 16a, 16b) by using a displacement of a bottom of each of the legs and a displacement of an end of each of the legs on the basis of a center of gravity of the walking robot.

3. The walking robot according to claim 2, wherein the stiffness adjusting unit (25) generates a stiffness adjusting pattern for each of the legs by using the displacement of the bottom of each of the legs and the displacement of the end of each of the legs according to the walking pattern generated from the walking pattern generating unit (20).

4. The walking robot according to any preceding claim, wherein the walking pattern generating unit (20) comprises a neural oscillator which has two modeled neurons and generates an oscillating pattern by interaction between the neurons, and the neural oscillator receives data about the operating states of the legs from the detecting parts and generates a walking pattern matching with a unique frequency of the walking robot.

5. The walking robot according to any preceding claim, wherein the stiffness adjusting unit (25) generates a stiffness adjusting pattern for each of the legs according to the walking pattern generated from the walking pattern generating unit (20), and adjusts the stiffness of each of the legs according to the stiffness adjusting pattern.

6. A method of controlling a walking robot including legs and driving parts to operate the legs, the method comprising:
generating a walking pattern by using predetermined control factors;
adjusting stiffness of each of the legs according to operating states of the legs which operate according to the walking pattern;
calculating a control value for each of the legs according to the walking pattern and the stiffness of each of the legs; and
controlling the operation of the legs according to the control value;
**characterized in that** the operating state of each of the legs is divided into a load-supporting step to support a weight of the walking robot, a taking-off step to take each of the legs off the ground respectively, a swing step, and a landing step to return each of the legs to the ground respectively, and **in that** said adjusting stiffness of each of the legs comprises adjusting the stiffness of the driving parts respectively according to the load-supporting step, the taking-off step, the swing step and the landing step, the adjusting further including setting the stiffness of the driving parts in the swing step and the landing step to be lower than the stiffness of the driving parts in the load-supporting step and the taking-off step.

7. The method according to claim 6, wherein the adjusting includes:
adjusting the stiffness of each of the legs by using a displacement of a bottom of each of the legs and a displacement of an end of each of the legs on the basis of a center of gravity of the walking robot.

8. The method according to claim 7, wherein the adjusting further includes:
generating a stiffness adjusting pattern for each of the legs by using the displacement of the bottom of each of the legs and the displacement of the end of each of the legs according to the walking pattern; and
adjusting the stiffness of each of the legs by using the stiffness adjusting pattern.

9. The method according to any one of claims 6-8, further comprising:
providing a neural oscillator to generate the walking pattern, the neural oscillator having two modeled neurons and generating an oscillating pattern by interaction between the neurons;
detecting the operating states of the legs;
transmitting data about the operating states of the legs to the neural oscillator; and
generating the walking pattern to match with a unique frequency of the walking robot.

10. The method according to any one of claims 6-9, wherein the adjusting includes:
generating a stiffness adjusting pattern for each of the legs according to the walking pattern; and
adjusting the stiffness of each of the legs according to the stiffness adjusting pattern.

## Patentansprüche

1. Schreitroboter, umfassend:
Beine;
Antriebsteile (10a, 10b, 12a, 12b, 14a, 14b, 16a, 16b), die jeweils an den Beinen vorgesehen sind, um die Beine zu betätigen;
Erfassungsteile, die jeweils an den Beinen vorgesehen sind, um einen Betätigungszustand für jedes Bein zu erfassen;
eine Schreitmustererzeugungseinheit (20), um ein Schreitmuster durch Verwenden vorgegebener Steuerungsfaktoren zu erzeugen; und
eine Steifigkeitsreguliereinheit (25), um eine Steifigkeit der Antriebsteile in Übereinstimmung mit den Betätigungszuständen der Beine zu regulieren, die in Übereinstimmung mit dem Schreitmuster arbeiten;
**dadurch gekennzeichnet, dass** der Betätigungszustand jedes der Beine aufgeteilt ist in einen Lasttrageschritt, um ein Gewicht des Schreitroboters zu tragen, einen Hebeschritt, um jedes der Beine jeweils vom Boden zu heben, einen Schwingschritt und einen Aufsetzschritt, um jedes der Beine jeweils zum Boden zurückzuführen, und dass die Steifigkeitsreguliereinheit (25) ausgebildet ist, um die Steifigkeit der Antriebsteile jeweils in Übereinstimmung mit dem Lasttrageschritt, dem Hebeschritt, dem Schwingschritt und dem Aufsetzschritt zu regulieren, und dass die Steifigkeitsreguliereinheit (25) die Steifigkeit der Antriebsteile (10a, 10b, 12a, 12b, 14a, 14b, 16a, 16b) in dem Schwingschritt und dem Aufsetzschritt so festlegt, dass sie geringer ist als die Steifigkeit der Antriebsteile in dem Lasttrageschritt und dem Hebeschritt.

2. Schreitroboter nach Anspruch 1, wobei die Steifigkeitsreguliereinheit (25) die Steifigkeit der Antriebsteile (10a, 10b, 12a, 12b, 14a, 14b, 16a, 16b) durch Verwenden einer Verlagerung eines unteren Teils jedes der Beine und einer Verlagerung eines Endes jedes der Beine auf Grundlage eines Schwerpunkts des Schreitroboters reguliert.

3. Schreitroboter nach Anspruch 2, wobei die Steifigkeitsreguliereinheit (25) ein Steifigkeitsreguliermuster für jedes der Beine durch Verwenden der Verlagerung des unteren Teils jedes der Beine und der Verlagerung des Endes jedes der Beine in Übereinstimmung mit dem erzeugten Schreitmuster aus der Schreitmustererzeugungseinheit (20) erzeugt.

4. Schreitroboter nach einem der vorstehenden Ansprüche, wobei die Schreitmustererzeugungseinheit (20) einen neuronalen Oszillator umfasst, der zwei modellierte Neuronen aufweist und ein Oszillationsmuster durch Wechselwirkung zwischen den Neuronen erzeugt, und der neuronale Oszillator Daten über die Betätigungszustände der Beine aus den Erfassungsteilen empfängt und ein Schreitmuster erzeugt, das auf eine unikale Frequenz des Schreitroboters abgestimmt ist.

5. Schreitroboter nach einem der vorstehenden Ansprüche, wobei die Steifigkeitsreguliereinheit (25) ein Steifigkeitsreguliermuster für jedes der Beine in Übereinstimmung mit dem erzeugten Schreitmuster aus der Schreitmustererzeugungseinheit (20) erzeugt, und die Steifigkeit jedes der Beine in Übereinstimmung mit dem Steifigkeitsreguliermuster reguliert.

6. Verfahren zur Steuerung eines Schreitroboters, einschließlich Beinen und Antriebsteilen zum Betätigen der Beine, wobei das Verfahren umfasst:
Erzeugen eines Schreitmusters durch Verwenden vorgegebener Steuerungsfaktoren;
Regulieren von Steifigkeit jedes der Beine in Übereinstimmung mit Betätigungszuständen der Beine, die in Übereinstimmung mit dem Schreitmuster arbeiten;
Berechnen eines Steuerungswerts für jedes der Beine in Übereinstimmung mit dem Schreitmuster und der Steifigkeit jedes der Beine; und
Steuern der Betätigung der Beine in Übereinstimmung mit dem Steuerungswert;
**dadurch gekennzeichnet, dass** der Betätigungszustand jedes der Beine aufgeteilt ist in einen Lasttrageschritt, um ein Gewicht des Schreitroboters zu tragen, einen Hebeschritt, um jedes der Beine jeweils vom Boden zu heben, einen Schwingschritt und einen Aufsetzschritt, um jedes der Beine jeweils zum Boden zurückzuführen, und dass das Regulieren von Steifigkeit jedes der Beine das Regulieren der Steifigkeit der Antriebsteile jeweils in Übereinstimmung mit dem Lasttrageschritt, dem Hebeschritt, dem Schwingschritt und dem Aufsetzschritt umfasst, wobei das Regulieren weiterhin einschließt, dass die Steifigkeit der Antriebsteile in dem Schwingschritt und dem Aufsetzschritt so festgelegt wird, dass sie geringer ist als die Steifigkeit der Antriebsteile in dem Lasttrageschritt und dem Hebeschritt.

7. Verfahren nach Anspruch 6, wobei das Regulieren einschließt:
Regulieren der Steifigkeit jedes der Beine durch Verwenden einer Verlagerung eines unteren Teils jedes der Beine und einer Verlagerung eines Endes jedes der Beine auf Grundlage eines Schwerpunkts des Schreitroboters.

8. Verfahren nach Anspruch 7, wobei das Regulieren weiterhin einschließt:
Erzeugen eines Steifigkeitsreguliermusters für jedes der Beine durch Verwenden der Verlagerung des unteren Teils jedes der Beine und der Verlagerung des Endes jedes der Beine in Übereinstimmung mit dem Schreitmuster; und
Regulieren der Steifigkeit jedes der Beine durch Verwenden des Steifigkeitsreguliermusters.

9. Verfahren nach einem der Ansprüche 6 - 8, weiterhin umfassend:
Bereitstellen eines neuronalen Oszillators, um das Schreitmuster zu erzeugen, wobei der neuronale Oszillator zwei modellierte Neuronen aufweist und ein Oszillationsmuster durch Wechselwirkung zwischen den Neuronen erzeugt;
Erfassen der Betätigungszustände der Beine;
Senden von Daten über die Betätigungszustände der Beine an den neuronalen Oszillator; und
Erzeugen des Schreitmusters so, dass es auf eine unikale Frequenz des Schreitroboters abgestimmt ist.

10. Verfahren nach einem der Ansprüche 6 - 9, wobei das Regulieren einschließt:
Erzeugen eines Steifigkeitsreguliermusters für jedes der Beine in Übereinstimmung mit dem Schreitmuster; und
Regulieren der Steifigkeit jedes der Beine in Übereinstimmung mit dem Steifigkeitsreguliermuster.

## Revendications

1. Robot marcheur comprenant :
des jambes ;
des parties motrices (10a, 10b, 12a, 12b, 14a, 14b, 16a,
16b) respectivement prévues au niveau des jambes pour faire fonctionner les jambes ;
des parties de détection respectivement prévues au niveau des jambes pour détecter un état de fonctionnement relatif à chaque jambe ;
une unité de génération de profil de marche (20) destinée à générer un profil de marche en utilisant des facteurs de commande prédéterminées ; et
une unité de réglage de rigidité (25) destinée à régler la rigidité des parties motrices conformément aux états de fonctionnement des jambes qui fonctionnent conformément au profil de marche ;
**caractérisé en ce que** ledit état de fonctionnement de chacune des jambes est divisé en une étape de support de charge dans laquelle est supporté le poids du robot marcheur, une étape de levée dans laquelle chacune des jambes est respectivement levée du sol, une étape de balancement, et une étape de posée dans laquelle chacune des jambes revient respectivement au sol, et **en ce que** l'unité de réglage de rigidité (25) est configurée pour respectivement régler la rigidité des parties motrices conformément à l'étape de support de charge, l'étape de levée, l'étape de balancement et l'étape de posée, et **en ce que** l'unité de réglage de rigidité (25) fixe la rigidité des parties motrices (10a, 10b, 12a, 12b, 14a, 14b, 16a, 16b) pendant l'étape de balancement et l'étape de posée de manière que celle-ci soit inférieure à la rigidité des parties motrices pendant l'étape de support de charge et l'étape de levée.

2. Robot marcheur selon la revendication 1, dans lequel l'unité de réglage de rigidité (25) règle la rigidité des parties motrices (10a, 10b, 12a, 12b, 14a, 14b, 16a, 16b) en utilisant un déplacement du bas de chacune des jambes et un déplacement de l'extrémité de chacune des jambes compte tenu du centre de gravité du robot marcheur.

3. Robot marcheur selon la revendication 2, dans lequel l'unité de réglage de rigidité (25) génère un profil de réglage de la rigidité pour chacune des jambes en utilisant le déplacement du bas de chacune des jambes et le déplacement de l'extrémité de chacune des jambes conformément au profil de marche généré par l'unité de génération de profil de marche (20).

4. Robot marcheur selon l'une quelconque des revendications précédentes, dans lequel l'unité de génération de profil de marche (20) comprend un oscillateur neuronal qui présente deux neurones modélisés et génère un profil oscillant par interaction entre les neurones, et l'oscillateur neuronal reçoit des données concernant les états de fonctionnement des jambes de la part des parties de détection et génère un profil de marche coïncidant avec une fréquence unique du robot marcheur.

5. Robot marcheur selon l'une quelconque des revendications précédentes, dans lequel l'unité de réglage de rigidité (25) génère un profil de réglage de la rigidité pour chacune des jambes conformément au profil de marche généré par l'unité de génération de profil de marche (20), et règle la rigidité de chacune des jambes conformément au profil de réglage de la rigidité.

6. Procédé de commande d'un robot marcheur comportant des jambes et des parties motrices destinées à faire fonctionner les jambes, le procédé comprenant :
la génération d'un profil de marche en utilisant des facteurs de commande prédéterminés ;
le réglage de la rigidité de chacune des jambes conformément aux états de fonctionnement des jambes qui fonctionnent conformément au profil de marche ;
le calcul d'une valeur de commande pour chacune des jambes conformément au profil de marche et à la rigidité de chacune des jambes ; et
la commande du fonctionnement des jambes conformément à la valeur de commande ;
**caractérisé en ce que** l'état de fonctionnement de chacune des jambes est divisé en une étape de support de charge dans laquelle est supporté le poids du robot marcheur, une étape de levée dans laquelle chacune des jambes est respectivement levée du sol, une étape de balancement, et une étape de posée dans laquelle chacune des jambes revient respectivement au sol, et **en ce que** ledit réglage de rigidité de chacune des jambes comprend le réglage de la rigidité des parties motrices respectivement en conformité avec l'étape de support de charge, l'étape de levée, l'étape de balancement et l'étape de posée, le réglage comprenant en outre la fixation de la rigidité des parties motrices pendant l'étape de balancement et l'étape de posée de manière que celle-ci soit inférieure à la rigidité des parties motrices pendant l'étape de support de charge et l'étape de levée.

7. Procédé selon la revendication 6, dans lequel le réglage comprend :
le réglage de la rigidité de chacune des jambes en utilisant un déplacement du bas de chacune des jambes et un déplacement de l'extrémité de chacune des jambes compte tenu du centre de gravité du robot marcheur.

8. Procédé selon la revendication 7, dans lequel le réglage comprend en outre :
la génération d'un profil de réglage de la rigidité pour chacune des jambes en utilisant le déplacement du bas de chacune des jambes et le déplacement de l'extrémité de chacune des jambes conformément au profil de marche ; et
le réglage de la rigidité de chacune des jambes en utilisant le profil de réglage de la rigidité.

9. Procédé selon l'une quelconque des revendications 6 à 8, comprenant en outre :
la mise en place d'un oscillateur neuronal destiné à générer le profil de marche, l'oscillateur neuronal présentant deux neurones modélisés et générant un profil oscillant par interaction entre les neurones ;
la détection des états de fonctionnement des jambes ;
la transmission des données concernant les états de fonctionnement des jambes auprès de l'oscillateur neuronal ;
et
la génération du profil de marche devant coïncider avec une fréquence unique du robot marcheur.

10. Procédé selon l'une quelconque des revendications 6 à 9, dans lequel le réglage comprend :
la génération d'un profil de réglage de la rigidité pour chacune des jambes conformément au profil de marche ; et
le réglage de la rigidité de chacune des jambes conformément au profil de réglage de la rigidité.
